# EUROPÄISCHE PATENTSCHRIFT

(11) **EP 3 622 191 B1**
(45) Veröffentlichungstag und Bekanntmachung des Hinweises auf die Patenterteilung: **01.12.2021**
(21) Anmeldenummer: 18720091.0
(22) Anmeldetag: 12.04.2018
(51) Int. Cl.: F16D 13/52, F16D 13/72, F16D 13/74, F16D 25/12

(54) **SCHALTEINHEIT FÜR KÜHLÖL UND HYBRIDMODUL MIT SCHALTEINHEIT**
SWITCHING UNIT FOR COOLING OIL, AND HYBRID MODULE HAVING A SWITCHING UNIT
UNITÉ DE COMMUTATION POUR HUILE DE REFROIDISSEMENT ET MODULE HYBRIDE POURVU D'UNE UNITÉ DE COMMUTATION

(30) Priorität: 11.05.2017 DE 102017110193; 22.06.2017 DE 102017113839
(43) Veröffentlichungstag der Anmeldung: 18.03.2020
(73) Patentinhaber: Schaeffler Technologies AG & Co. KG, 91074 Herzogenaurach (DE)
(72) Erfinder: LEHMANN, Steffen, 76275 Ettlingen (DE); HELFER, Marc, 67530 Ottrott (FR); HOFSTETTER, Dirk, 76448 Durmersheim (DE)
(86) Internationale Anmeldenummer: PCT/DE2018/100344
(87) Internationale Veröffentlichungsnummer: WO 2018/206039

(56) Entgegenhaltungen:
- DE-A1-102011 013 234
- DE-A1-102011 081 006
- DE-A1-102016 202 656
- DE-T5-112015 000 947

## Beschreibung

Die Erfindung betrifft eine Doppelkupplung mit einer Schalteinheit für das Zuführen von Kühlöl zu zwei (Teil-) Kupplungen, die selektiv schließbar sind, um Drehmoment von einer gemeinsamen Antriebswelle entweder auf eine erste Abtriebswelle oder auf eine zweite Abtriebswelle zu übertragen. D. h., dass immer nur eine der beiden Kupplungen geschlossen ist, also Drehmoment überträgt, und die andere der beiden Kupplungen geöffnet ist. Weiterhin betrifft die Erfindung ein Hybridmodul für einen Antriebsstrang eines Kraftfahrzeugs, insbesondere mit einer P1-Hybrid-Anordnung, also einer Hybridanordnung, bei der die E-Maschine an der Kurbelwelle der Verbrennungskraftmaschine befestigt ist, mit zwei (Teil-) Kupplungen und einer solchen Schalteinheit.

Aus dem Stand der Technik sind bereits Kupplungseinrichtungen mit Kühlölschalteinheiten bekannt. Zum Beispiel offenbart die DE 10 2016 202 656 A1 eine Kupplungseinrichtung mit: ersten und zweiten Reibelementen, die um eine Drehachse drehbar gelagert sind; eine hydraulische Betätigungseinrichtung, um die Reibelemente axial aneinander zu pressen; wobei die Betätigungseinrichtung einen hydraulischen Arbeitsraum mit einem ersten Kolben umfasst, der axial auf eines der Reibelemente wirkt; ein Ventil zur Steuerung eines Flusses von Fluid zu den Reibelementen, wenn die Reibelemente gegeneinander gepresst werden; einen zweiten Kolben zur Betätigung des Ventils, wobei der zweite Kolben dazu eingerichtet ist, das Ventil zu öffnen, wenn ein Druck in einer hydraulischen Zuleitung zum hydraulischen Arbeitsraum ansteigt, wobei der zweite Kolben dazu eingerichtet ist, eine fluide Verbindung zwischen der hydraulischen Zuleitung und dem hydraulischen Arbeitsraum zu verschließen, während das Ventil geschlossen ist.

Der Stand der Technik hat jedoch immer den Nachteil, dass, wenn eine solche Kühlöleinrichtung in einer Doppelkupplung verbaut wird, die thermische Kühlung der Kupplung nicht ausreicht, wenn beide Teilkupplungen die gleiche, hälftige Kühlölmenge zugeteilt bekommen. Es wäre also notwendig, die Kühlölmenge erheblich zu steigern. Solche Kühlöleinrichtungen sind also nicht für herkömmliche Doppelkupplungen des Stands der Technik anwendbar.

Eine Doppelkupplung gemäß dem Oberbegriff des Anspruchs 1 ist aus jeder der zuvor genannten DE 10 2016 202 656 A1 und aus der DE 10 2011 013 234 A1 bekannt. Bezüglich weiteren Standes der Technik wird auf die DE 10 2011 081 006 A1 und die DE 11 2015 000 947 T5 verwiesen.

Es ist also die Aufgabe der Erfindung, die Nachteile aus dem Stand der Technik zu vermeiden oder wenigstens zu verringern. Insbesondere soll eine Kühlölverteilung entwickelt werden, die für die Doppelkupplung anwendbar ist und verbessert ist. Insbesondere soll eine bedarfsgerechte Kühlölverteilung für ein Hybridmodul mit einer Doppelkupplung entwickelt werden, die besonders wenig Kühlöl benötigt.

Die Aufgabe der Erfindung wird bei einer gattungsgemäßen Vorrichtung erfindungsgemäß dadurch gelöst, dass die Doppelkupplung eine Schalteinheit mit einem Schieber und damit wirkgekoppelte Fluidkanäle aufweist, die so miteinander in Wirkbeziehung gebracht sind, dass die Schalteinheit einer ausgewählten Kupplung Kühlöl in Abhängigkeit davon zuführt, welche der zwei Kupplungen drehmomentübertragend mit der ersten Abtriebswelle oder der zweiten Abtriebswelle verbunden ist. Das heißt, dass die Schalteinheit für die Kühlfluidverteilung abhängig von einem Öffnungs-/Schließzustand der zwei Kupplungen ein Kühlfluid zwischen den zwei Kupplungen verteilt.

Dies hat den Vorteil, dass nur diejenige Kupplung gekühlt wird bzw. stärker mit Kühlölfluid bzw. Kühlöl versorgt werden kann, die jeweils betätigt, d. h. geschlossen, ist. Dadurch ist es möglich, mit einer geringeren Kühlölmenge ein verbessertes Kühlergebnis für die Doppelkupplung zu erreichen. Es kann also auch ein effizientes Kühlen erfolgen mit einer geringeren Kühlölmenge, was dazu führt, dass die Kupplungen thermisch höher belastbar sind oder geringere Pumpverluste entstehen.

Vorteilhafte Ausführungsformen werden in den Unteransprüchen beansprucht und werden nachfolgend näher erläutert.

Zudem ist es zweckmäßig, wenn die Schalteinheit so ausgelegt ist, dass sie der Kupplung, die drehmomentübertragend mit der ersten Abtriebswelle oder der zweiten Abtriebswelle verbunden ist, Kühlöl zuführt. Das heißt, dass sie einer ersten Kupplung Kühlöl zuführt, wenn die erste Kupplung geschlossen ist, und dass sie einer zweiten Kupplung Kühlöl zuführt, wenn die zweite Kupplung geschlossen ist. Im Umkehrschluss bedeutet dies auch, dass die Schalteinheit einer ersten Kupplung kein Kühlöl zuführt, wenn die erste Kupplung geöffnet ist, und dass sie der zweiten Kupplung kein Kühlöl zuführt, wenn die zweite Kupplung geöffnet ist. Dadurch wird die Kühlölverteilung also an den Kühlölbedarf angepasst, so dass immer nur diejenige Kupplung, die Drehmoment überträgt, also in Reibschluss ist, gekühlt werden muss. Ist eine Kupplung geöffnet, besteht kein Reibschluss zwischen den zwei Kupplungsteilen, so dass keine Reibungswärme entsteht.

Ferner ist es vorteilhaft, wenn der Schieber so gelagert und ansteuerbar ist, dass er in Abhängigkeit von der Zufuhr von für das Betätigen der jeweiligen Kupplung genutzten Hydraulikmittel/Betätigungsöl so zwangsverlagert wird, dass er selektiv eine Kühlölzufuhr zu der betätigten, d. h. geschlossenen, Kupplung freigibt. So wird in vorteilhafter Weise die Betätigung der Kupplung hydraulisch mit der Steuerung der bedarfsgerechten Ölverteilung gekoppelt, so dass keine zusätzliche Steuerung nötig ist, um das Kühlöl optimal auf die betätigte Kupplung zu verteilen.

Weiterhin ist es von Vorteil, wenn die Schalteinheit so ausgelegt ist, dass der Schieber durch einen ersten Betätigungsöldruck zum Betätigen einer ersten Kupplung der zwei Kupplungen oder durch einen zweiten Betätigungsöldruck zum Betätigen einer zweiten Kupplung der zwei Kupplungen so verschoben wird, dass das Kühlöl der ersten Kupplung oder der zweiten Kupplung zugeführt wird. Die Schalteinheit ist also hydraulisch mit den Kanälen für den Betätigungsöldruck zum Betätigen der Kupplung verbunden, so dass die Zwangsverlagerung des Schiebers der Schalteinheit realisiert wird. Dadurch, dass kein zusätzliches Steuersystem verwendet werden muss, wird auch die Fehleranfälligkeit reduziert, da ohne einen Betätigungsöldruck auch die Kupplung nicht funktioniert, also mit vorhandenem Betätigungsöldruck auch die Schalteinheit für das Kühlöl funktioniert.

Ein günstiges Ausführungsbeispiel zeichnet sich dadurch aus, dass die Schalteinheit eine definierte Leckage aufweist, so dass zu den zwei Kupplungen in jeder Schaltstellung der Kupplungen eine geringe Kühlölmenge geführt wird. Dadurch fließt also auch bei geöffneter Kupplung eine verringerte Restmenge an Kühlöl zu der geöffneten Kupplung, so dass unter anderem die dort befindlichen Lagerstellen ausreichend gekühlt werden.

Zusätzlich ist es von Vorteil, wenn ein Kanal zum Fördern des Kühlöls fluidisch von einem Kanal zum Fördern des Betätigungsöls getrennt ist. Dadurch wird ausgeschlossen, dass ein Leck in einem der Kanäle sich auf die Funktionsfähigkeit des anderen der Kanäle auswirkt. Weiterhin wird dadurch ausgeschlossen, dass sich das Kühlöl mit dem Betätigungsöl vermischen kann.

Auch ist es zweckmäßig, wenn der Schieber/Kolbenschieber in eine erste Schaltstellung verlagerbar ist, in der zu der ersten Kupplung Kühlöl geführt wird, und die zweite Kupplung fluidisch von dem Kühlmittelstrom bis auf eine geringe Leckage getrennt ist. Der Schieber ist also so ausgelegt, dass, wenn z. B. die erste Kupplung betätigt, also aktiviert wird, sich der Schieber derart verschiebt, dass ein Großteil der Kühlölmenge in die für die erste Kupplung vorgesehenen Verteilerkanäle fließt. Dabei wird die Verschiebung des Schiebers durch das Aufbringen des Betätigungsöldrucks für die erste Kupplung erwirkt.

Ferner ist es von Vorteil, wenn der Schieber in eine zweite Schaltstellung verlagerbar ist, in der zu der zweiten Kupplung Kühlöl geführt wird, und die erste Kupplung fluidisch von dem Kühlmittelstrom bis auf eine geringe Leckage getrennt ist. Der Schieber befindet sich also in der ersten Schaltstellung, wenn die erste Kupplung mit Betätigungsdruck beaufschlagt wird, also geschlossen ist, und in der zweiten Schaltstellung, wenn die zweite Kupplung mit Betätigungsöldruck beaufschlagt wird, also geschlossen ist. Dies gilt für eine Kupplung, die als Normally-Open-Kupplung ausgeführt ist.

Weiterhin wird die Aufgabe der Erfindung dadurch gelöst, dass ein Hybridmodul für einen Antriebsstrang des KFZs, mit zwei Teilkupplungen und einer erfindungsgemäßen Schalteinheit eingesetzt wird.

Dabei ist es möglich, dass die Kupplungen als Normally-Open-Kupplung oder als Normally-Closed-Kupplung ausgebildet sind. Sind die Kupplungen als Normally-Open-Kupplungen ausgeführt, wird der Kühlölstrom zur ersten Kupplung gelenkt, wenn Betätigungsöl zur ersten Kupplung gelenkt wird. Sind die Kupplungen als Normally-Closed-Kupplung ausgebildet, wird das Kühlöl dann zu der ersten Kupplung gelenkt, wenn die zweite Kupplung mit Betätigungsöldruck beaufschlagt wird, da das Beaufschlagen mit Betätigungsöldruck zu einem Öffnen der zweiten Kupplung führt.

Mit anderen Worten betrifft die Erfindung eine Doppelkupplung mit einer Schalteinheit zur Verbesserung der Kühlfluidverteilung in einem Hybridmodul. Dabei weist das Hybridmodul mindestens zwei fluid- bzw. ölgekühlte Kupplungen auf, bei denen die Verteilung von Kühlfluid bzw. Kühlöl stärker auf die eine bzw. auf die andere Kupplung erfolgt, die jeweils betätigt, also geschlossen, ist/wird. Das Kühlfluid wird mittels eines Steuerkolbens/Schiebers/Kolbenschiebers verteilt, der durch den zum Schließen der jeweiligen Kupplung aufgebrachten Betätigungsfluiddruck zwangsverschoben wird. Dabei können die Kupplungen solche Kupplungen sein, die in einer Ruhestellung offen (normally open) und/oder in einer Ruhestellung geschlossen (normally closed) sind.

In einem solchen Hybridmodul sind die zwei ölgekühlten Kupplungen vorhanden, wobei zum Betätigen/Schließen einer der beiden Teilkupplungen mittels eines Aktors oder einer Pumpe Betätigungsöldruck auf die eine Teilkupplung oder die andere Teilkupplung aufgebracht wird. Zum Kühlen der Kupplungen wird Kühlöl über einen separaten Kanal der einen Teilkupplung oder der anderen Teilkupplung zugeführt. Dabei werden das Drucköl zum Betätigen und das Kühlöl über Kanäle einer Ölverteilereinheit weitergeleitet. Da bei einem gleichmäßigen Verteilen des Kühlöls in den Kupplungen jede Teilkupplung nur die Hälfte der Kühlölmenge erhalten würde, kommt es zu einem thermisch ungünstigen Zustand, da jeweils nur eine der beiden Kupplungen Reibenergie einleitet, nämlich die Kupplung, die Drehmoment überträgt.

In der Ölverteilereinheit/Schalteinheit der Kupplung ist ein Schieber integriert, der beidseitig mit dem Betätigungsöldruck für die erste Kupplung oder die zweite Kupplung beaufschlagt werden kann. Bei einem Schließen der ersten Kupplung wird durch den Betätigungsöldruck für die erste Kupplung der Schieber so verschoben, dass ein Großteil der Kühlölmenge in die für die erste Kupplung vorgesehene Verteilerkanäle fließt. Durch eine definierte Leckage kann dafür gesorgt werden, dass immer noch eine verringerte Restmenge in Richtung der zweiten Kupplung und dort befindlicher Lagerstellen und anderer Bauteile fließt. Wird dann die zweite Kupplung aktiviert, verschiebt sich der Schieber so, dass ein Großteil der Kühlölmenge zu den für die zweite Kupplung vorgesehenen Verteilerkanälen fließt. Somit wird auch mit einer geringeren Kühlölmenge ein effizientes Kühlen erzielt, was zu thermisch höher belastbaren Kupplungen oder geringeren Pumpverlusten führt.

Die Erfindung wird nachfolgend mit Hilfe von Figuren erläutert. Es zeigen:
- Fig. 1: eine Querschnittsansicht eines erfindungsgemäßen Hybridmoduls mit einer erfindungsgemäßen Schalteinheit,
- Fig. 2: die Schalteinheit in einer ersten Schaltstellung, und
- Fig. 3: die Schalteinheit in einer zweiten Schaltstellung.

Die Figuren sind lediglich schematischer Natur und dienen ausschließlich dem Verständnis der Erfindung. Die gleichen Elemente werden mit denselben Bezugszeichen gekennzeichnet.

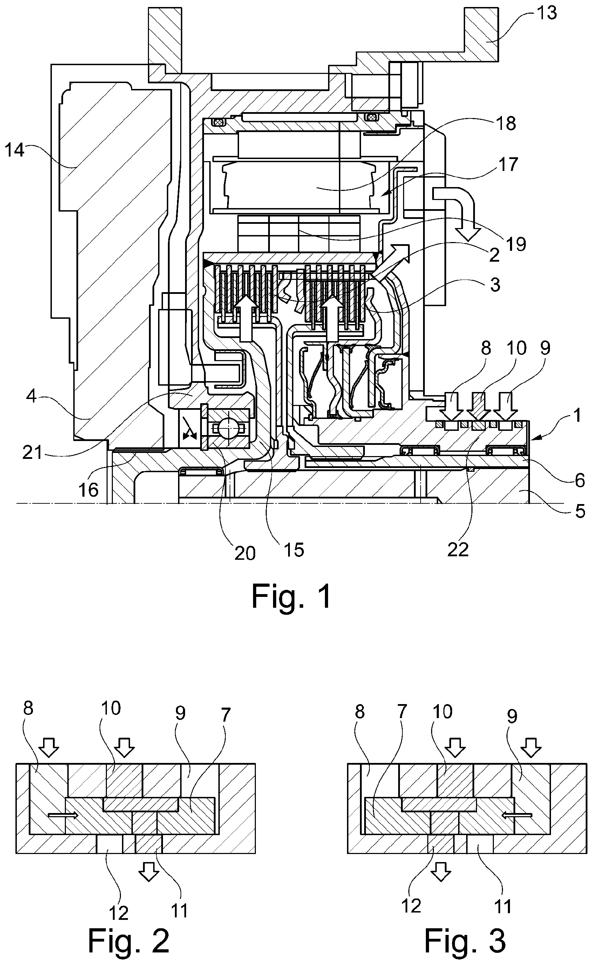

Fig. 1 zeigt eine Schalteinheit 1 für das Zuführen von Kühlöl zu einer ersten Kupplung 2 und einer zweiten Kupplung 3, die selektiv schließbar sind, um Drehmoment von einer gemeinsamen Antriebswelle 4 entweder auf eine erste Abtriebswelle 5 oder auf eine zweite Abtriebswelle 6 zu übertragen. Dabei kann die erste Kupplung 2 die Antriebswelle 4 drehmomentübertragend mit der ersten Abtriebswelle 5 verbinden und die zweite Kupplung 3 die Antriebswelle 4 mit der zweiten Abtriebswelle 6 verbinden.

Die Schalteinheit 1 weist einen Schieber 7 und damit wirkgekoppelte Fluidkanäle 8, 9, 10, 11, 12 auf, die so miteinander in Wirkbeziehung gebracht sind, dass die Schalteinheit 1 einer ausgewählte Kupplung 2, 3 Kühlöl in Abhängigkeit davon zuführt, welche der zwei Kupplungen 2, 3 drehmomentübertragend mit der ersten Abtriebswelle 5 oder der zweiten Abtriebswelle 6 verbunden ist.

Die zwei Kupplungen 2, 3 sind Teil eines Hybridmoduls 13. In dem Hybridmodul 13 ist ein Torsionsschwingungsdämpfer 14 an einer Kurbelwelle, die als die Antriebswelle 4 dient, befestigt, so dass ein Motormoment auf eine Rotoreinheit 15 des Hybridmoduls 13 über eine Steckverzahnung 16 übertragen wird. Das Hybridmodul 13 enthält eine E-Maschine 17, die einen Stator 18 und einen konzentrisch dazu angeordneten Rotor 19 besitzt. Der Rotor 19 ist drehfest auf der Rotoreinheit 15 fixiert. Innerhalb dieser Rotoreinheit 15 sind die zwei Kupplungen 2, 3 integriert, wobei die Kupplungen 2, 3 ölgekühlt sind. Die Rotoreinheit 15 ist über ein erstes Wälzlager 20 in einem Gehäuse 21 des Hybridmoduls 13 gelagert. Über ein zweites Wälzlager ist die Rotoreinheit 15 auf einer Hohlwelle 22 gelagert.

Die Schalteinheit 1 besitzt einen ersten Betätigungsöldruckzuführkanal 8, der ausgelegt ist, um zum Betätigen der ersten Kupplung 2 Betätigungsöl zuzuführen, so dass die erste Kupplung 2 mit Betätigungsöldruck beaufschlagt wird und dadurch betätigt wird. Weiter besitzt die Schalteinheit 1 einen zweiten Betätigungsöldruckzuführkanal 9, der der zweiten Kupplung 3 Betätigungsöl zuführt, so dass die zweite Kupplung 3 mit Betätigungsöldruck beaufschlagt wird und dadurch betätigt wird. In der Schalteinheit 1 ist auch ein Kühlölzufuhrkanal 10 vorhanden, der Kühlöl in die Schalteinheit 1 einleitet.

Auch besitzt die Schalteinheit 1 einen ersten Kühlölkanal 11, der mit der ersten Kupplung 2 verbunden ist und ausgelegt ist, um der ersten Kupplung 2 Kühlöl zuzuführen. Zusätzlich besitzt die Schalteinheit 1 einen zweiten Kühlölkanal 1, der mit der zweiten Kupplung 3 verbunden ist und ausgelegt ist, um der zweiten Kupplung 3 Kühlöl zuzuführen.

Fig. 2 zeigt die Schalteinheit 1 in der ersten Schaltstellung. In der ersten Schaltstellung ist die erste Kupplung 2 mit Betätigungsöldruck beaufschlagt, so dass die erste Kupplung 2 geschlossen ist. Durch den Betätigungsöldruck in dem ersten Betätigungsöldruckzufuhrkanal 8 wird der Schieber 7 der Schalteinheit 1 so in der Schalteinheit 1 verschoben, dass der Kühlölzufuhrkanal 10 mit dem ersten Kühlölkanal 11 verbunden wird, so dass die erste Kupplung 2 mit Kühlöl versorgt werden kann.

Wenn die zweite Kupplung 3 mit Betätigungsöldruck beaufschlagt wird, wirkt der Betätigungsöldruck so über den zweiten Betätigungsöldruckzufuhrkanal 9 auf den Schieber 7 der Schalteinheit 1, dass dieser so verschoben wird, dass der Kühlölzufuhrkanal 10 mit dem zweiten Kühlölkanal 12 verbunden wird, so dass die zweite Kupplung 3 mit Kühlöl versorgt werden kann. Dadurch wird der Schieber 7 der Schalteinheit 1 also in die zweite Schaltstellung verschoben (vgl. Fig. 3) und die zweite Kupplung 3 mit Kühlöl versorgt. Der Schieber 7 der Schalteinheit 1 ist also nur so verlagerbar, dass der Kühlölzufuhrkanal 10 immer mit einem des ersten und des zweiten Kühlölkanals 11, 12 verbunden ist und von dem anderen des ersten und des zweiten Kühlölkanals 11, 12 getrennt ist. Der Schieber 7 der Schalteinheit 1 sperrt also selektiv die Kühlölzufuhr zu der geöffneten Kupplung 2, 3.

Je nach dem, ob der erste Betätigungsöldruckzufuhrkanal 8 oder der zweite Betätigungsöldruckzufuhrkanal 9 mit Betätigungsöldruck beaufschlagt wird, wird der erste Kühlölkanal 11 oder der zweite Kühlölkanal 12 mit dem Kühlölzufuhrkanal 10 verbunden. Sind die Kupplungen 2, 3 im Ruhezustand geöffnet (normally open), so erwirkt eine Betätigung der ersten Kupplung 2 eine Kühlölzufuhr zur ersten Kupplung 2 und eine Betätigung der zweiten Kupplung 3 eine Kühlölzufuhr zur zweiten Kupplung 3. Sind die Kupplungen 2, 3 im Ruhezustand geschlossen (normally closed), so erwirkt eine Betätigung der ersten Kupplung 2 eine Kühlölzufuhr zur zweiten Kupplung 3 und eine Betätigung der zweiten Kupplung 3 eine Kühlölzufuhr zur ersten Kupplung 2.

### Bezugszeichenliste

- 1: Schalteinheit
- 2: erste Kupplung
- 3: zweite Kupplung
- 4: Antriebswelle
- 5: erste Abtriebswelle
- 6: zweite Abtriebswelle
- 7: Schieber
- 8: erster Betätigungsöldruckzufuhrkanal
- 9: zweiter Betätigungsöldruckzufuhrkanal
- 10: Kühlölzufuhrkanal
- 11: erster Kühlkanal
- 12: zweiter Kühlkanal
- 13: Hybridmodul
- 14: Torsionsschwingungsdämpfer
- 15: Rotoreinheit
- 16: Steckverzahnung
- 17: E-Maschine
- 18: Stator
- 19: Rotor
- 20: erstes Wälzlager
- 21: Gehäuse
- 22: Hohlwelle

## Patentansprüche

1. Doppelkupplung, die aufweist:
eine erste Kupplung (2) und eine zweite Kupplung (3), die selektiv schließbar sind, um Drehmoment von einer Antriebswelle (4) entweder auf eine erste Abtriebswelle (5) oder auf eine zweite Abtriebswelle (6) zu übertragen, wobei mittels der ersten Kupplung (2) die Antriebswelle (4) mit der ersten Abtriebswelle (5) und mittels der zweiten Kupplung (3) die Antriebswelle (3) mit der zweiten Abtriebswelle drehmomentübertragend verbindbar ist, und
eine Schalteinheit (1) für das Zuführen von Kühlöl zu der ersten Kupplung (2) und der zweiten Kupplung (3),
**dadurch gekennzeichnet, dass**
die Schalteinheit (1) einen Schieber (7) und damit wirkgekoppelte Fluidkanäle (8, 9, 10, 11, 12) aufweist, die so miteinander in Wirkbeziehung gebracht sind, dass die Schalteinheit (1) einer ausgewählten Kupplung der ersten Kupplung (2) und der zweiten Kupplung (3) Kühlöl in Abhängigkeit davon zuführt, welche der ersten Kupplung (2) und der zweiten Kupplung (3) drehmomentübertragend mit der ersten Abtriebswelle (5) oder der zweiten Abtriebswelle (6) verbunden ist.

2. Doppelkupplung nach Anspruch 1, **dadurch gekennzeichnet, dass** die Schalteinheit (1) so ausgelegt ist, dass sie der drehmomentübertragend mit der ersten Abtriebswelle (5) oder der zweiten Abtriebswelle (6) verbundenen Kupplung der ersten Kupplung (2) und der zweiten Kupplung (3) Kühlöl zuführt.

3. Doppelkupplung nach Anspruch 1 oder 2, **dadurch gekennzeichnet, dass** der Schieber (7) so gelagert und ansteuerbar ist, dass er in Abhängigkeit von der Zufuhr von für das Betätigen der jeweiligen Kupplung der ersten Kupplung (2) und der zweiten Kupplung (3) genutztem Hydraulikmittel so zwangsverlagert wird, dass er selektiv eine Kühlölzufuhr zu der betätigten Kupplung der ersten Kupplung (2) und der zweiten Kupplung (3) freigibt.

4. Doppelkupplung nach einem der Ansprüche 1 bis 3, **dadurch gekennzeichnet, dass** die Schalteinheit (1) so ausgelegt ist, dass der Schieber (7) durch einen ersten Betätigungsöldruck zum Betätigen der ersten Kupplung (2) oder durch einen zweiten Betätigungsöldruck zum Betätigen der zweiten Kupplung (3) so verschoben wird, dass das Kühlöl der ersten Kupplung (2) oder der zweiten Kupplung (3) zugeführt wird.

5. Doppelkupplung nach einem der Ansprüche 1 bis 4, **dadurch gekennzeichnet, dass** die Schalteinheit (1) eine definierte Leckage aufweist, so dass zu der ersten Kupplung (2) und der zweiten Kupplung (3) in jeder Schaltstellung der ersten Kupplung (2) und der zweiten Kupplung (3) eine geringe Kühlölmenge geführt wird.

6. Doppelkupplung nach einem der Ansprüche 4 oder 5, **dadurch gekennzeichnet, dass** ein Kanal (10, 11, 12) zum Fördern des Kühlöls fluidisch von einem Kanal (7, 8) zum Fördern des Betätigungsöls getrennt ist.

7. Doppelkupplung nach einem der Ansprüche 4 bis 6, **dadurch gekennzeichnet, dass** der Schieber (7) in eine erste Schaltstellung verlagerbar ist, in der zu der ersten Kupplung (2) Kühlöl geführt wird und die zweite Kupplung (3) fluidisch von dem Kühlmittelstrom getrennt ist.

8. Doppelkupplung nach einem der Ansprüche 4 bis 7, **dadurch gekennzeichnet, dass** der Schieber (7) in eine zweite Schaltstellung verlagerbar ist, in der zu der zweiten Kupplung (3) Kühlöl geführt wird und die erste Kupplung (2) fluidisch von dem Kühlmittelstrom getrennt ist.

9. Hybridmodul (13) für einen Antriebsstrang eines Kraftfahrzeugs, mit einer Doppelkupplung nach einem der Ansprüche 1 bis 8.

10. Hybridmodul (13) nach Anspruch 9, **dadurch gekennzeichnet, dass** die Kupplungen (2, 3) als Normally-Open-Kupplung oder als Normally-Closed-Kupplung ausgebildet sind.

## Claims

1. A dual clutch, comprising:
a first clutch (2) and a second clutch (3) which are can be selectively closed in order to transmit torque from a drive shaft (4) either to a first output shaft (5) or to a second output shaft (6), wherein, by means of the first clutch (2), the drive shaft (4) can be connected to the first output shaft (5) and, by means of the second clutch (3), the drive shaft (3) can be connected to the second output shaft in a torque-transmitting manner, and
a switching unit (1) for supplying cooling oil to the first clutch (2) and the second clutch (3),
**characterised in that**
the switching unit (1) comprises a slider (7) and fluid ducts (8, 9, 10, 11, 12) which are operatively coupled thereto, which are brought into operative relationship with one another in such a way that the switching unit (1) supplies cooling oil to a selected clutch of the first clutch (2) and the second clutch (3) depending on which of the first clutch (2) and the second clutch (3) is connected in a torque-transmitting manner to the first output shaft (5) or the second output shaft (6).

2. The dual clutch according to claim 1, **characterised in that** the switching unit (1) is designed to supply cooling oil to that clutch of the first clutch (2) and the second clutch (3) which is connected in a torque-transmitting manner to the first output shaft (5) or the second output shaft (6).

3. The dual clutch according to claim 1 or 2, **characterised in that** the slider (7) is mounted and controllable in such a way that it is forcibly moved depending on the supply of hydraulic fluid used for actuating the respective clutch of the first clutch (2) and the second clutch (3) in such a way that it selectively releases a cooling oil supply to the actuated clutch of the first clutch (2) and the second clutch (3).

4. The dual clutch according to one of claims 1 to 3, **characterised in that** the switching unit (1) is designed such that the slider (7) is displaced by a first actuating oil pressure for actuating the first clutch (2) or by a second actuating oil pressure for actuating the second clutch (3), such that the cooling oil is supplied to the first clutch (2) or to the second clutch (3).

5. The dual clutch according to one of claims 1 to 4, **characterised in that** the switching unit (1) exhibits a defined leakage, so that a small amount of cooling oil is supplied to the first clutch (2) and the second clutch (3) in each switching position of the first clutch (2) and the second clutch (3).

6. The dual clutch according to one of claims 4 or 5, **characterised in that** a channel (10, 11, 12) for conveying the cooling oil is fluidically separated from a channel (7, 8) for conveying the actuating oil.

7. The dual clutch according to one of claims 4 to 6, **characterised in that** the slider (7) can be moved into a first switching position in which cooling oil is supplied to the first clutch (2) and the second clutch (3) is fluidically separated from the coolant flow.

8. The dual clutch according to one of claims 4 to 7, **characterised in that** the slider (7) can be moved into a second switching position in which cooling oil is supplied to the second clutch (3) and the first clutch (2) is fluidically separated from the coolant flow.

9. A hybrid module (13) for a drive train of a motor vehicle, with a dual clutch according to one of claims 1 to 8.

10. The hybrid module (13) according to claim 9, **characterised in that** the clutches (2, 3) are in the form of normally open clutches or normally closed clutches.

## Revendications

1. Double embrayage, qui comprend :
un premier embrayage (2) et un second embrayage (3) qui peuvent être fermés sélectivement afin de transmettre un couple provenant d'un arbre d'entraînement (4) soit à un premier arbre de sortie (5), soit à un second arbre de sortie (6), au moyen du premier embrayage (2), l'arbre d'entraînement (4) pouvant être relié au premier arbre de sortie (5) et au moyen du second embrayage (3), l'arbre d'entraînement (3) pouvant être relié au second arbre de sortie de manière à transmettre le couple et
une unité de commutation (1) pour amener l'huile de refroidissement jusqu'au premier embrayage (2) et jusqu'au second embrayage (3),
**caractérisé en ce que**
l'unité de commutation (1) présente un coulisseau (7) et des canaux de fluide (8, 9, 10, 11, 12) qui sont couplés fonctionnellement à ce dernier et qui sont mis en relation fonctionnelle les uns avec les autres de manière à ce que l'unité de commutation (1) amène l'huile de refroidissement jusqu'à un embrayage sélectionné du premier embrayage (2) et du second embrayage (3) en fonction de celui qui, parmi le premier embrayage (2) et le second embrayage (3), est relié au premier arbre de sortie (5) ou au second arbre de sortie (6) de manière à transmettre le couple.

2. Double embrayage selon la revendication 1, **caractérisé en ce que** l'unité de commutation (1) est conçue de manière à ce qu'elle amène l'huile de refroidissement jusqu'à l'embrayage du premier embrayage (2) et du second embrayage (3) relié au premier arbre de sortie (5) ou au second arbre de sortie (6) de manière à transmettre le couple.

3. Double embrayage selon la revendication 1 ou 2, **caractérisé en ce que** le coulisseau (7) est monté et actionnable de manière à ce qu'il soit déplacé, de force, en fonction de l'amenée du fluide hydraulique utilisé pour l'actionnement de l'embrayage respectif du premier embrayage (2) et du second embrayage (3) afin qu'il libère sélectivement une amenée d'huile de refroidissement jusqu'à l'embrayage actionné du premier embrayage (2) et du second embrayage (3).

4. Double embrayage selon l'une quelconque des revendications 1 à 3, **caractérisé en ce que** l'unité de commutation (1) est conçue de manière à ce que le coulisseau (7) soit déplacé par une première pression d'huile d'actionnement pour actionner le premier embrayage (2) ou par une seconde pression d'huile d'actionnement pour actionner le second embrayage (3) afin que l'huile de refroidissement soit amenée jusqu'au premier embrayage (2) ou jusqu'au second embrayage (3).

5. Double embrayage selon l'une quelconque des revendications 1 à 4, **caractérisé en ce que** l'unité de commutation (1) présente une fuite définie, de sorte qu'une petite quantité d'huile de refroidissement soit amenée jusqu'au premier embrayage (2) et jusqu'au second embrayage (3) dans chaque position de commutation du premier embrayage (2) et du second embrayage (3).

6. Double embrayage selon l'une quelconque des revendications 4 ou 5, **caractérisé en ce qu'**un canal (10, 11, 12) pour le transport de l'huile de refroidissement est séparé fluidiquement d'un canal (7, 8) pour le transport de l'huile d'actionnement.

7. Double embrayage selon l'une quelconque des revendications 4 à 6, **caractérisé en ce que** le coulisseau (7) peut être déplacé dans une première position de commutation, dans laquelle l'huile de refroidissement est amenée jusqu'au premier embrayage (2) et le second embrayage (3) est séparé fluidiquement du flux de liquide de refroidissement.

8. Double embrayage selon l'une quelconque des revendications 4 à 7, **caractérisé en ce que** le coulisseau (7) peut être déplacé dans une seconde position de commutation, dans laquelle l'huile de refroidissement est amenée jusqu'au second embrayage (3) et le premier embrayage (2) est séparé fluidiquement du flux de liquide de refroidissement.

9. Module hybride (13) pour une chaîne cinématique d'un véhicule automobile, pourvu d'un double embrayage selon l'une quelconque des revendications 1 à 8.

10. Module hybride (13) selon la revendication 9, **caractérisé en ce que** les embrayages (2, 3) sont conçus sous la forme d'embrayage normalement ouvert ou d'embrayage normalement fermé.
